# EUROPEAN PATENT APPLICATION

(11) **EP 1 120 716 A2**
(43) Date of publication of application: **01.08.2001**
(21) Application number: 00306691.7
(22) Date of filing: 07.08.2000
(51) Int. Cl.: G06F 17/30

(54) **Sound structure for web navigation**

(30) Priority: 20.01.2000 US 488729
(71) Applicant: LUCENT TECHNOLOGIES INC., Murray Hill, New Jersey 07974-0636 (US)
(72) Inventor: Roberts, Linda, Sea Bright, New Jersey 07760 (US); Sikora, Cynthia A., Morganville, New Jersey 07751 (US)
(74) Representative: Watts, Christopher Malcolm Kelway, Dr.

(57) **Abstract**

A method and apparatus for associating an auditory cue with a navigational aid for use in navigating the Internet is disclosed. At least one element of a history or bookmark list, regardless of the structural representation of that list, of a browser is associated with a sound. In particular, "sound bytes" are stored in wave files on a storage medium of a computer running the browser. At least one element, e.g., a web page name, of the history list is associated with one of the stored wave files. The associated sound is played when the web page is accessed and may be heard again when passing a cursor over the name in a history mechanism, or reaccessing the web page. Thus, a user can associate particular locations on the web with particular sounds.

## Description

### BACKGROUND OF THE INVENTION

### (1) FIELD OF THE INVENTION

This invention relates generally to information retrieval systems, and, in particular, to web navigation.

### (2) BACKGROUND

Today, the Internet (referred to hereafter as the "web") provides a user with access to numerous sources of information via a browser application executing on their personal computer. The user typically navigates the web by using the hypertext transfer protocol (http) structure of the web to display a page of information, which may include links to other relevant web pages. For example, a user may point their browser to a search engine, which initially displays a web page for entering search criteria and then subsequently displays a web page of results comprising links to other web pages. The http structure of the Web is easy for people to understand and they are quick to take advantage of exploring links to other web pages. To assist in tracking where they have been, the browser may have a history mechanism that organizes the web pages visited in, e.g., chronological order. Thus, the history mechanism may provide a linear or hierarchical list of web page names (also referred to as URLs (uniform resource locators), link names), each of which is associated with an http address. Alternatively, a user can "bookmark" web pages in a linear or hierarchical list (e.g., a directory structure of folders, each folder comprising a related set of bookmarks and, perhaps, other folders). As used herein, the web page name, or the http address, is also referred to as a navigational aid.

Unfortunately, accessing information and keeping track of those web pages deemed important in a search is often confusing and difficult notwithstanding the presence of a history list or a bookmark list for collecting the web page names. For example, in performing a search a user may follow links to explore new topics and may forget what they were doing or where they were. Alternatively, a user may desire to revisit a previous web page either to see if information contained therein has changed, or to pursue a different search path - yet the history mechanism will only present the user with, what may be, a long list of web pages that are indistinguishable in terms of content. All of these possibilities may lead to confusion and disorientation for a user in navigating the information space.

### SUMMARY OF THE INVENTION

Therefore, we have realized an improved method and apparatus for presenting a collection of navigational aids to a user, wherein each navigational aid points to an information source on a network. In particular, an auditory cue is associated with at least one of these collected navigational aids.

In an embodiment of the invention, at least one element of a history or bookmark list, regardless of the structural representation of that list, of a browser is associated with a sound. In particular, "sound bytes" are stored in wave files on a storage medium of a computer running the browser. At least one element, e.g., a web page name, of a history list is associated with one of the stored wave files. The associated sound is played when the web page is accessed. Upon referencing the web page name (e.g., by passing a cursor over the web page name, selecting the web page name, reaccessing the web page, etc.) the wave file may be played again. Thus, a user can associate particular locations on the web with particular sounds. This auditory feedback serves as an additional memory trigger for use in web navigation.

### BRIEF DESCRIPTION OF THE DRAWING

FIG. 1 shows an illustrative block diagram of a browser architecture in accordance with the inventive concept;
FIG. 2 shows an illustrative method for use in the browser of FIG. 1 in accordance with the principles of the invention;
FIG. 3 shows an association between navigational aids and audio files in accordance with the inventive concept;
FIG. 4 shows an illustrative block diagram of an apparatus in accordance with the inventive concept;
FIG. 5 shows an illustrative hierarchical association of audio files in accordance with the principles of the invention;
FIG. 6 shows an illustrative example of a search that would map to the sound structure in FIG. 5 in accordance with the principles of the invention; and
FIG. 7 shows an illustrative linear collection of audio files that map to the links in FIG. 6 in accordance with the principles of the invention.

### DETAILED DESCRIPTION

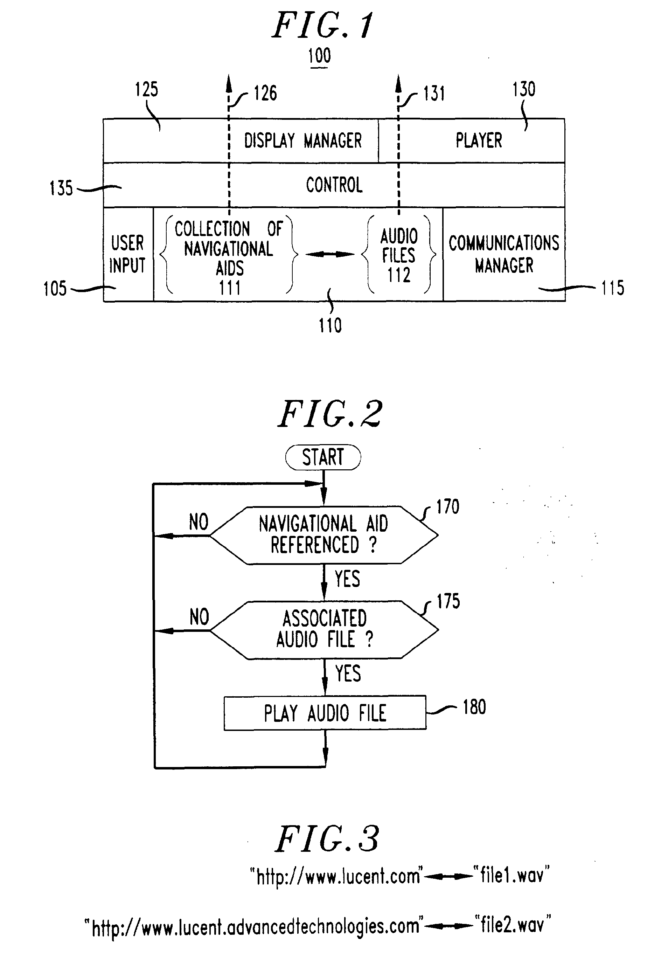

FIG. 1 shows an illustrative block diagram of a browser architecture in accordance with the principles of the invention. Other than the inventive concept, the elements shown in FIG. 1 are well-known and will not be described in detail. In addition, the browser architecture of FIG. 1 incorporates the inventive concept, described further below, using conventional programming techniques, which, as such, will also not be described herein. (It should be noted that although the inventive concept is illustrated in the context of a browser, the invention is not so limited.)

Browser 100 comprises a number of software modules of which the following are noted: user input 105, communications manager 115, control 135, display manager 125, player 130 and element 110. (It should be noted that for purposes of explaining the inventive concept, it is assumed browser 100 represents, e.g., an "executable" file. However, the various elements could also be distributed across a network, be called as library functions, be written as "applets," etc.) Control 135 orchestrates the display of information via display manager 125, which controls the visual presentation of information to a user (not shown) via a display (not shown.) One example of information visually presented to a user is a collection of navigational aids (described below). Similarly, control 135 controls communications manager 115 for coupling the browser to the Internet (not shown). Control 135 receives user input via user input 105. Examples of the latter are the position of pointing devices, such as a mouse, relative to locations on the display, "mouse clicks" (left or right), character input, etc. Finally, browser 110 comprises element 110 and player 130. Element 110 comprises a collection of navigational aids 111 typically constructed and played by browser 100 - while the user "surfs" the web - either automatically or at the direction of the user. These navigational aids represent, e.g., web page names and/or associated http addresses. Examples of such a collection of navigational aids are a linear list of previously visited web sites (usually automatically created by the browser) and a hierarchical list (e.g., usually a directory structure of folders, each folder. comprising a related set of bookmarks and, perhaps, other folders created by the user). Both list types, in and of themselves, are known in the art. In addition to the collection of navigational aids 111, element 110 comprises, in accordance with the invention, a collection of audio files, or audio cues, 112. The latter are, e.g., audio files, or sound bytes, stored on a non-volatile storage device such as a hard disk drive (not shown) in any one of a number of formats. For illustrative purposes only, it is assumed that audio files 112 are stored as "wave" files as known in the art. (Although not necessary to the inventive concept, the audio files could be portions of music, or differ in such parameters as, e.g., variation in pitch, duration, repetition rate, volume, harmonics, etc.)

In accordance with the inventive concept, browser 100 enables an association of at least one audio file of collection 112 with one of the navigational aids of collection 111 (described further below). This is done by any one of a number of mechanisms for setting parameters and is not described herein. For example, browser 100 may automatically associate each web page with one of the audio files from collection 112. Alternatively, the user may administer browser 100 to define the association, e.g., by initially referencing one of the navigational aids of collection 111 by passing a pointing device, e.g., a mouse, over a representation of the navigational aid provided by display manger 125. The user then "right clicks" selects "properties" and is presented with a list (not shown) representing the audio files of collection 112, from which the user picks a sound to associate with that particular navigational aid. Whatever association method is used, when the user subsequently references that particular navigational aid as indicated by signaling from user input 105 (e.g., by passing a cursor over the web page name, selecting the web page name, reaccessing the web page via a single click or double click, etc.), control 135 causes the associated audio file, from collection 112, to be played to the user via player 130. This is shown in FIG. 2 by the illustrative method comprising steps 170, 175 and 180. Therefore, and in accordance with the invention, sound is used for web navigation and allows users to identify the location of information in the history list, either hierarchically or linearly. An illustrative association of two navigational aids in accordance with the principles of the invention is shown in FIG. 3.

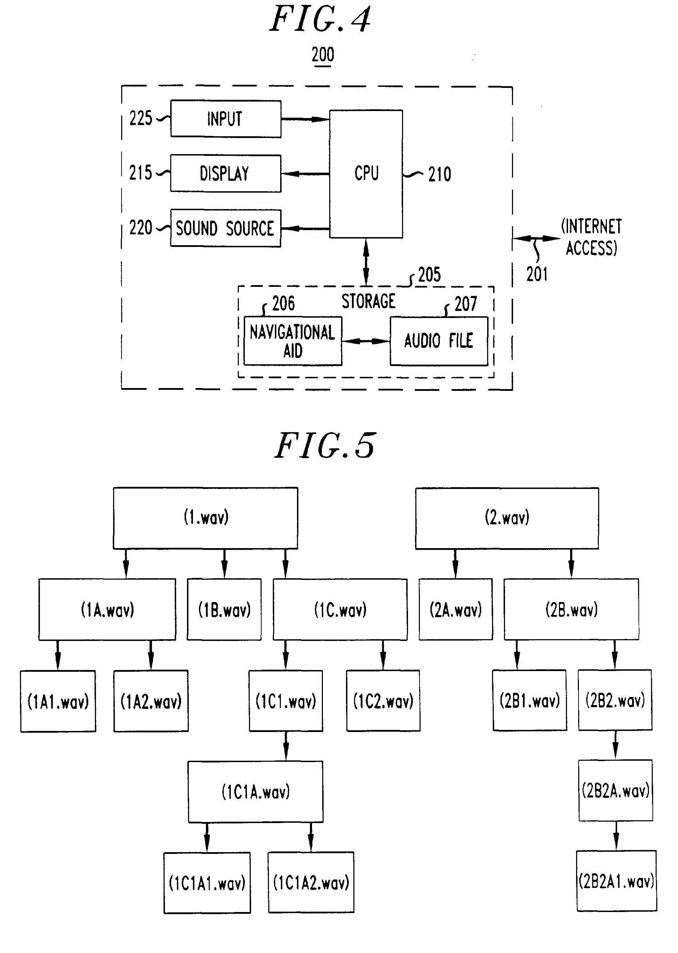

Another illustrative embodiment of the inventive concept is shown in FIG. 4, which shows a block diagram of a portion of a computer 200 embodying the principles of the invention. Computer 200 comprises input element 225, display 215, sound source 220, central processing unit (CPU) 210, and storage element 205 for storing a collection of navigational aids 206 and a collection of audio files 207. (It should be noted that CPU 210 is illustratively a stored-program-controlled microprocessor and storage element 205 represents both volatile and non-volatile storage devices, e.g., random access memory (RAM), hard disk drives, etc.) CPU 210 executes the above-described browser 100 of FIG. 1 from memory (not shown) and provides Internet access via connection 201. CPU 210 process user inputs from input 225, updates display information 215, and plays associated audio files when a navigational aid is referenced (as described above) by the user (not shown) via sound source 220.

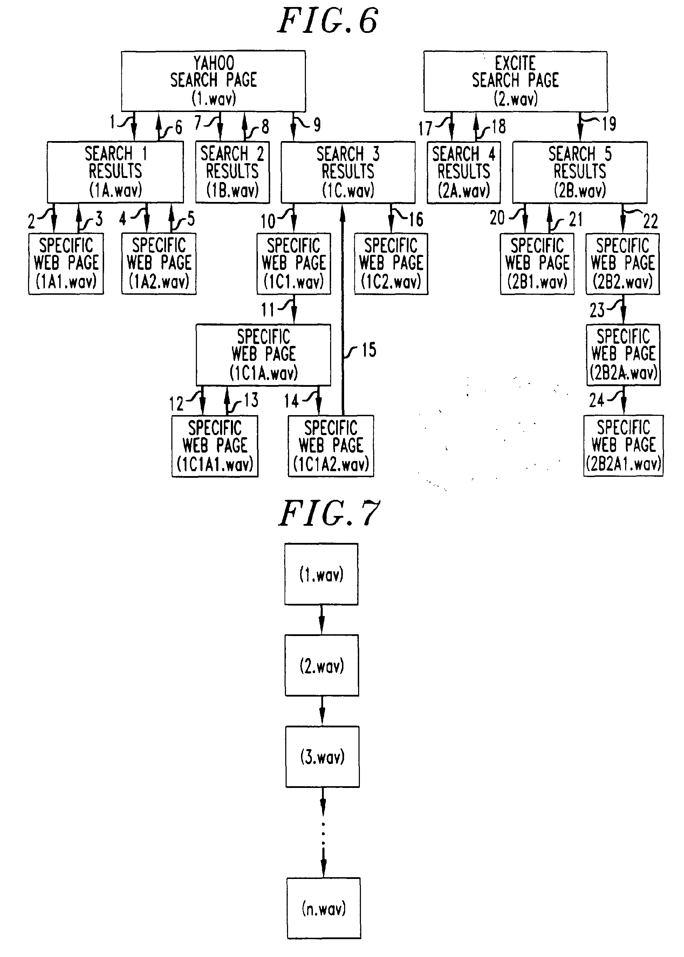

In accordance with a feature of the invention, the sound files are stored with a naming convention that corresponds to the structural representation of the search (e.g., linear or hierarchical) and emitted when the user initiates the movement to a new web page. One illustration of this is shown in FIGs. 5 and 6.

In this example, it is assumed that an audio collection, e.g., audio collection 112, of FIG. 1 is arranged in a hierarchical order as shown in FIG. 5. In this example, sounds are organized in "branches," which contain "superordinate" and "subordinate" nodes. For example, the wave file "1.wav" is a superordinate node to the subordindate notes: "1A.wav," "1B.wav" and "1C.wav" files. Similarly, the wave file "1A.wav" is a superordinate node to the subordinate node "1A1.wav." (The hierarchical structure can be defined in a separate file, e.g., via use of a "lookup" table as known in the art. Or, the structure could be a part of the wave file name as illustrated in FIG. 5 through the use of the prefixes "1", "1A", "1A1," etc. In the later case, the sound file names have an initial number that indicates the branch (two of which are shown in FIG. 5, branch 1 and branch 2.) Each of the different branches are, illustratively, derivatives of "master sounds" (e.g., short melodic motifs, each corresponding to a unique branch of the hierarchy). Each of the nodes in the second level of a branch (e.g., files "1A.wav," "1B.wav," and "1C.wav") could provide unique harmonic representations of the master sound (e.g., "1.wav"). The nodes at the levels. going down each branch would change in rhythmic variations and timbre variations. The nodes within a level would vary in duration and speed.

Thus, if a user was organizing their search in a hierarchical fashion, the sounds may also be so-organized. This is shown in FIG. 6, which represents a search by a user using the Yahoo search page and also the Excite search page. (Both Yahoo and Excite are known search engines on the web.) The numbers next to each arrow represent the order in which a link was followed. For this example, it is assumed that browser 100 automatically associates the audio cues with each of the navigational aids, or links. (For example, a matrix (not shown) that stores the links available on the current page can be used to determine if the next page visited is spawned from the current page in order to assign the associated auditory file within the structure.) When a new web page is visited from a current web page, it becomes a new level of that branch. When additional web pages are visited from the same web page, those web pages become additional nodes at that level. Entering a new address to access a web page would start a new branch of the hierarchy. (Thus, the separation between the Yahoo (associated with branch 1) and Excite (associated with branch 2). The sounds from the sound list are produced based on determining where the web page is in the conceptual hierarchical structure. When web pages are revisited, the same sound is produced as was previously produced. An example of the sound file mapping to the hierarchical search structure can be seen in FIG. 6.

Conversely, if the history mechanism is organized linearly in which each web page is listed in the order viewed and web pages revisited are duplicated, the sounds can provide an equivalent linear structure that has a discernable pattern that represents the temporal path traveled by the user. An example would be to have a series of short earcons (melodic motifs) that differ by melodic content, harmonic content, rhythmic pattern, timbre, tempo (speed), and duration in a discernable linear pattern. The onset of the linear pattern could be represented by a melodic motif that varies in its timbre and rhythm.. As an example of this pattern, the first timbre could be a piano, the first rhythmic pattern could be four quarter notes, and the tempo could change from slow to fast. The user would associate a slow tempo with four quarter notes played on a piano as the beginning of the search. The same rhythmic pattern (i.e., four quarter notes) and the same timbre (i.e., piano), but a fast tempo would indicate that the sound is associated with a web page early in the search, but not at the beginning. For a linear structure of the audio collection, the sound files are illustratively stored in numerical order and played with each web page visited, including a new sound when web pages are revisited. The file names would have a one to one relationship with the order in which the web pages are visited (i.e., the first web page visited would have sound file 1.wav and the n^{th} web page visited would have the n.wav file). This association can be performed automatically by the browser and/or the user, as mentioned above. Within the linear structure, each web page visited would be listed in the history list and would receive a new sound even when it is repeated. FIG. 7 shows an illustrative linear collection of audio files that map, e.g., to the illustrative links in FIG. 6.

As described above, the inventive concept provides the ability to associate auditory feedback with navigational aids to provide a navigational cue. As such, the inventive concept takes advantage of the unique properties of a sound by creating an additional memory trigger to remind a user where a particular type of information may reside. Thus, ambient cues provide additional information to assist people in finding something that they have previously encountered. Indeed, the sounds may be organized with the same organizational structure as the history mechanism by varying parameters of the sounds. Also, the linear and hierarchical organizational structures are merely illustrative. Other organizational structures may be used, e.g., a combination of a linear structure and a hierarchical structure.

The foregoing merely illustrates the principles of the invention and it will thus be appreciated that those skilled in the art will be able to devise numerous alternative arrangements which, although not explicitly described herein, embody the principles of the invention and are within its scope.

## Claims

1. An information retrieval method comprising the steps of:
collecting a list of information sources; and
associating at least one auditory cue with at least one of the information sources from the list.

2. The method of claim 1 further comprising the steps of:
storing at least one audio file, wherein the at least one auditory cue is associated with the at least one stored audio file; and
playing out the at least one stored audio file when the at least one information source is referenced.

3. The method of claim 1 wherein the associating step includes the step of enabling a user to associate the at least one auditory cue with the at least one of the information sources from the list.

4. The method of claim 1 wherein associating step includes the step of automatically associating the at least one auditory cue with the at least one of the information sources from the list.

5. The method of claim 1 further comprising the step of storing at least one audio file, wherein the at least one auditory cue is represented by the at least one stored audio file.

6. The method of claim 1 wherein the association of the at least one auditory cue and the at least one of the information sources is performed in a linear fashion.

7. The method of claim 1 wherein the association of the at least one auditory cue and the at least one of the information sources is performed in a hierarchical fashion.

8. The method of claim 1 wherein the list of information comprises web page names.

9. The method of claim 1 wherein the list of information comprises hypertext transfer protocol addresses.

10. A computer-based apparatus comprising:
a processor for forming a list of navigational aids in response to a number of information retrieval requests, wherein the navigation aids represents information sources located in a communications network; and
a storage element for storing an association of an auditory cue with at least one navigational aid from the list of navigational aids.

11. The apparatus of claim 10 wherein the at least one navigational aid is a web page name.

12. The apparatus of claim 10 wherein the at least one navigational aid is a hypertext transfer protocol address.

13. The apparatus of claim 10 further comprising a sound system and wherein the processor causes the associated auditory cue to be played out upon a reference to the at least one navigational aid.
